# EUROPEAN PATENT SPECIFICATION

(11) **EP 3 456 562 B1**
(45) Date of publication and mention of the grant of the patent: **19.08.2020**
(21) Application number: 18194147.7
(22) Date of filing: 13.09.2018
(51) Int. Cl.: B60H 1/00, F24F 13/14

(54) **A RACK GEAR WITH RELEASE FEATURE**
ANTRIEBSEINRICHTUNG MIT ZAHNSTANGE UND AUSLÖSEMECHANISMUS
MÉCANISME D'ENTRAÎNEMENT À CRÉMAILLÈRE AVEC DISPOSITIF DE DÉSENGAGEMENT

(30) Priority: 15.09.2017 IT 201700103579
(43) Date of publication of application: 20.03.2019
(73) Proprietor: DENSO THERMAL SYSTEMS S.p.A., 10046 Poirino (Torino) (IT)
(72) Inventor: BENEDETTO, Roberto, I-10046 POIRINO (Torino) (IT); BERGAMO, Luca, I-10046 POIRINO (Torino) (IT)
(74) Representative: Vanzini, Christian

(56) References cited:
- EP-A2- 1 176 039
- DE-A1- 10 135 330
- JP-A- 2011 241 897
- US-A1- 2006 030 255
- US-B1- 6 209 404

## Description

The present invention refers to a mechanism for connecting a first and a second rotating member having respective parallel rotation axes and placed at a fixed distance from each other.

A specific example of the scope of the invention is the air distribution boxes of motor vehicle air conditioning systems, where air distribution flaps are used to mix fresh and/or treated air and to convey it to different areas of a vehicle passenger compartment.

In certain applications, it may be necessary for two different flaps to be started or stopped sequentially. This may be achieved by using respective actuation systems for the two flaps, which in turn are coordinated at the electronic control level. However, for reasons of simplicity and economy, it may be preferable to operate the two flaps with the same actuation system.

DE 10135330 A1 discloses a mechanism according to the preamble of claim 1.

One purpose of the present invention is therefore to make available a mechanism of simple construction that allows a sequential control of two flaps.

More generally, one object of the invention is to make available a mechanism that allows a sequential control of two rotating elements having parallel rotation axes and placed at a fixed distance from each other.

For this purpose, according to the invention a mechanism having the features of claim 1 is provided.

Due to the engagement between the follower portion and the control profile of the rack member during the first travel section of the rack member, the rotating member associated with the gear wheel remains stationary for the entire first travel section, while the rotating member associated with the lever rotates. The rotating member is only put in motion when the engagement between the toothing of the gear wheel and the toothing of the rack member has been achieved. In this way, it is possible to implement a sequential actuation of the two rotating members with a single kinematic chain. By reversing the direction of rotation starting from a position wherein there is an engagement between the toothing of the gear wheel and the toothing of the rack member, the two rotating members rotate simultaneously until reaching the position of end of mutual engagement between the two toothings, after which only the rotating member associated with the lever will rotate, while the rotating member associated with the gear wheel will maintain its position by means of the control profile of the rack member.

Further features and advantages of the mechanism according to the invention will become more apparent in the following detailed description of an embodiment of the invention, made with reference to the accompanying drawings, provided purely to be illustrative and nonlimiting, wherein
figure 1 is a perspective view of a detail of a distribution box fitted with a mechanism according to the invention;
figure 2 is a perspective view of the mechanism in figure 1, associated with the two flaps of the air distribution box; and
figures 3 to 5 are views in side elevation of the mechanism, in three different
operating positions.

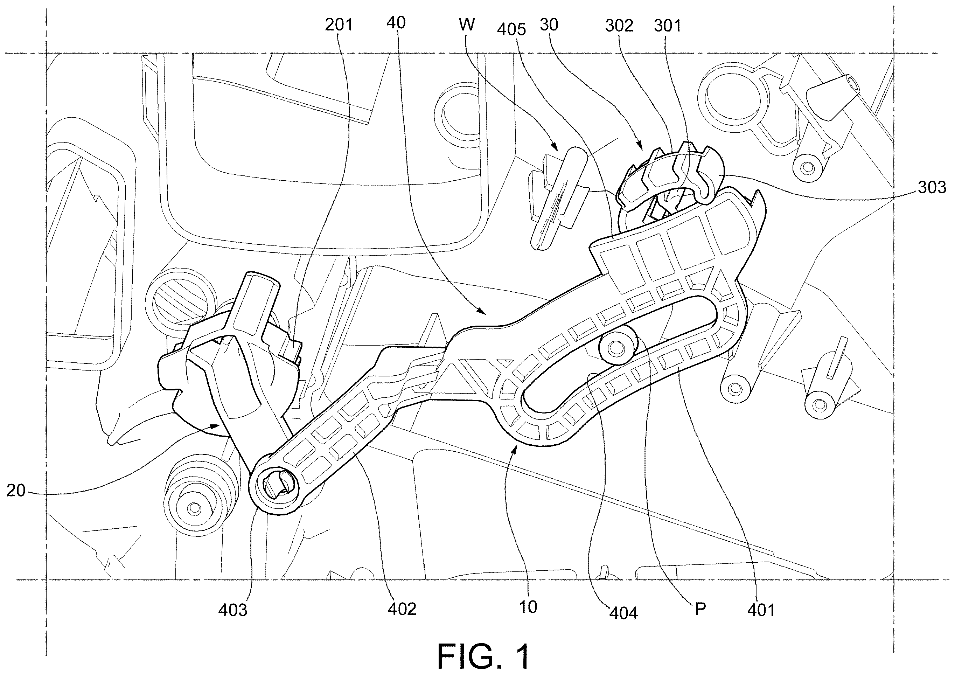

In figure 1 a detail of a wall W of an air distribution box of an air conditioning system for a motor vehicle is represented. The wall W supports a mechanism according to the invention, indicated collectively at 10.

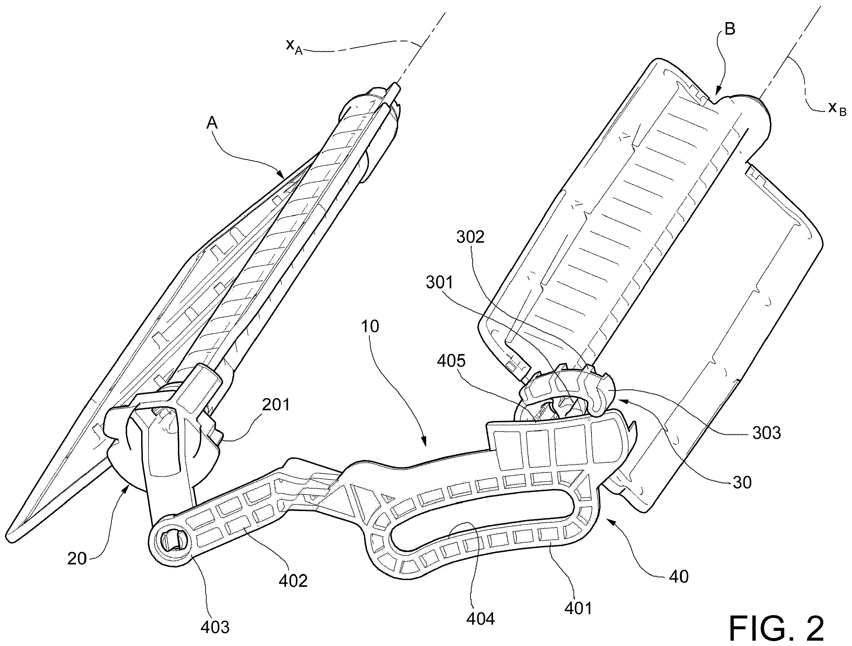

With reference also to figure 2, the mechanism 10 is connected to a first flap A and a second flap B of the air distribution box, having respective parallel rotation axes _{XA} and _{XB} and placed at a fixed distance from each other. The flaps A and B comprise therefore respective shafts, each of which has one end supported by the wall W of the air distribution box, and an opposite end supported by another part of the air distribution box.

The mechanism 10, arranged on the opposite side of the wall W relative to the flaps A and B, comprises a lever 20 rigidly connected to the shaft of the first flap A, and thus also rotatable around the rotation axis _{XA} of the first flap A. The lever 20 may be a plastic monolithic member.

The lever 20 is connected directly or indirectly to a source of motion (not illustrated), such as a rotary actuator. In the example illustrated, such connection is made by means of a toothed section 201 made coaxially with the rotation axis x_{A} of the lever 20. In alternative embodiments different drive forms may be provided to connect the lever 20 to the source of motion, or it may be provided that the shaft of a rotary actuator is rigidly connected with the rotation axis x_{A} of the lever 20.

The mechanism 10 further comprises a gear wheel 30 which is rigidly connected to the shaft of the second flap B and therefore also rotates around the rotation axis x_{B} of the second flap B. The gear wheel 30 may be a monolithic plastic member.

Finally, the mechanism further comprises a rack member 40, which is connected to the lever 20 by means of a linkage and is movable in a constrained way between a first end position and a second end position. The rack member 40 may be a monolithic plastic member.

The gear wheel 30 comprises a toothing, in particular a toothed sector 301 made coaxially with the rotation axis x_{B} of the gear wheel 30. The gear wheel 30 further comprises a follower portion 302 projecting beyond the profile defined by the toothing of the gear wheel 30, the function of which is described hereinafter. In the example illustrated, the follower portion 302 is arranged axially staggered from the toothing 301 of the gear wheel 30.

The rack member 40 comprises a main body 401 and an appendage 402 extending from the main body 401 and having a distal end hinged to the lever 20. According to alternative embodiments, the linkage between the rack member 40 and the lever 20 may comprise intermediate members.

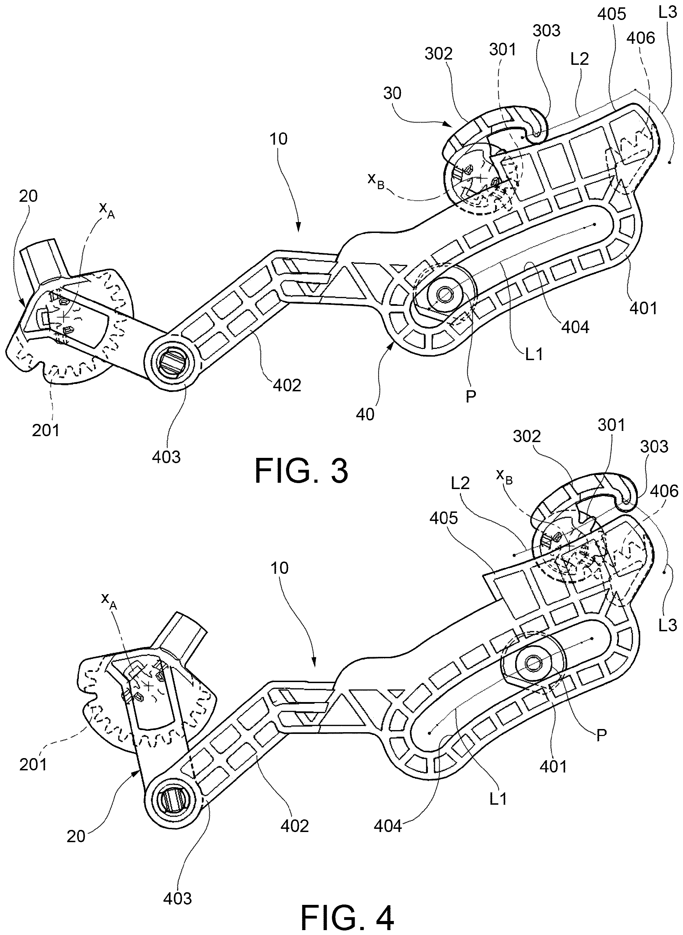

The main body 401 of the rack member 40 is provided with a groove 404, into which is inserted a constraint pin P protruding from the wall W of the distribution box. The constraint pin P is used to constrain the movement of the rack member between the first end position and the second end position, which are thus defined respectively by the opposite ends of the groove 404. In figures 3-5, the line indicated with L1 represents the possible positions of the center of the constraint pin P relative to the groove 404, between the first end position and the second end position of the rack member 40. The pin-groove coupling constrains the motion of the rack member along a curved trajectory.

The main body 401 of the rack member 40 further comprises a control profile 405 and a toothing 406, which extend approximately along a main direction defined by the groove 404. In this direction, the control profile 405 has a greater extension than the toothing 406. The control profile 405 projects beyond the toothing profile 406 of the rack member 40. Moreover, the control profile 405 is arranged axially staggered with respect to the toothing 406, correspondingly to the staggering between the follower portion 302 and the toothing 301 of gear wheel 30.

The control profile 405 of the rack member 40 is adapted to be engaged by one end 303 of the follower portion 302 of the gear wheel 30 in a first travel section of the rack member 40 from the first end position to the second end position.

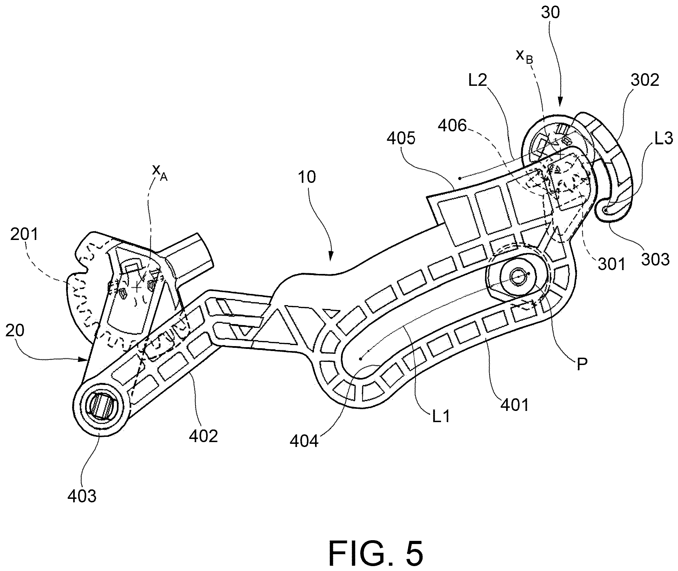

The toothing 406 of the rack member 40 is adapted to be engaged by the toothing 301 of the gear wheel 30 in a second travel section of the rack member 40 from the first end position to the second end position, following the first travel section. Figure 3 shows the mechanism 10 at a point in the first travel section of the rack member 40, while in figure 5 the same mechanism is represented at a point in the second travel section of the rack member 40. Figure 4 shows the mechanism at a transition point between the first travel section and the second travel section. In figures 3-5, the lines L2 and L3 represent the possible positions of one point of the free end 303 of the follower portion 302 of the gear wheel 30 with respect to the rack member 40 between the first end position and the second end position of the rack member.

The control profile 405 of the rack member 40 is further configured in such a way as to keep the gear wheel still when the gear wheel is in the first travel section of the rack member.

During a first rotation section of the lever 20 (figure 3), the rack member 40 moves in the direction defined by the groove 404; during such rotation section, the gear wheel 30 is held in a position defined by the free end 303 of the follower protrusion 302, which engages the control profile 405 of the rack member 40.

At a defined angular position of the lever 20 (figure 4), the rack member 40 is in a defined position where the free end 303 of the follower protrusion 302 of the gear wheel 30 reaches the end of the control profile 405 of the rack member 40; this allows the release of the follower protrusion 302 from the control profile 405 and allows the engagement of the toothing 301 of the gear wheel 30 with the toothing 406 of the rack member 40.

Then, as the lever 20 continues to travel (figure 3), the rack member 40 moves again in the direction defined by the groove 404 to the second end position. The follower portion 302 of the gear wheel 30 remains released; in the meantime, the gear wheel 30 rotates due to the effort between the toothing 301 thereof and the toothing 406 of the rack member 40.

By reversing the rotation of the lever 20, the sequence described above is reversed. The system which is coupled to the mechanism 10 may be configured to prevent the gear wheel 30 from moving away from the position defined by the contact between the follower portion of the gear wheel 30 and the control profile 405 of the rack member 40.

It is understood that the invention is not limited to the embodiments described and illustrated here, but only by the appended claims.

## Claims

1. A mechanism (10) for mutually connecting a first and a second rotating member (A, B) having respective rotation axes (x_{A}, x_{B}) parallel to and arranged at a fixed distance from each other, the mechanism (10) comprising
a support (W),
a lever (20) rotatably mounted on the support (W) and adapted to be rigidly connected to the first member (A),
a gear wheel (30) rotatably mounted on the support (W) and adapted to be rigidly connected to the second member (B), said gear wheel (30) comprising a toothing (301) and a follower portion (302) protruding beyond the profile of the gear wheel (30), and
a constraint pin (P) formed on the support (W) and located at a fixed distance from the rotation axes (x_{A}, x_{B}) of the first and second rotating member (A, B), and
a rack member (40) connected to the lever (20) by means of a linkage (403), the mechanism (10) being **characterized in that** a groove (404) is made in the rack member (40), said groove (404) being coupled to the constraint pin (P) in a way such that the rack member (40) is movable by constrained roto-translation along a curved trajectory between a first end position and a second end position, said rack member (40) comprising a control profile (405) adapted to be engaged by an end (303) of the follower portion (302) of the gear wheel (30) in a first travel section of the rack member (40) between the first end position and the second end position and released by the end (303) of the follower portion (302) of the gear wheel (30) in a second travel section of the rack member (40) between the first end position and the second end position, following or preceding the first travel section, and a toothing (406) adapted to be engaged by the toothing (301) of the gear wheel (30) in the second travel section between the first end position and the second end position,
wherein the control profile (405) is configured in such a way to keep the gear wheel (30) still when the gear wheel is in the first travel section of the rack member (40).

2. A mechanism (10) according to claim 1, wherein the follower portion (302) is arranged axially staggered with respect to the toothing (301) of the gear wheel (30), and wherein the control profile (405) is correspondingly arranged axially staggered with respect to the toothing (406) of the rack member (40).

3. A mechanism (10)
according to claim 1 or 2, wherein the rack member (40) further comprises an appendage (402) extending beyond an end of the groove (404) and hinged to the lever (20).

4. A mechanism (10)
according to any of the preceding claims, wherein the lever (20) is configured to be connected to a motion source.

5. An air distribution box for motor vehicles comprising a mechanism (10) according to any of the preceding claims, as well as a first air distribution flap (A) rigidly connected to the lever (20) and a second air distribution flap (B) rigidly connected to the gear wheel (30).

## Patentansprüche

1. Mechanismus (10) zum gegenseitigen Verbinden eines ersten und eines zweiten Drehbauteils (A, B), die jeweilige Drehachsen (x_{A}, x_{B}) parallel zu- und bei einem festen Abstand voneinander angeordnet aufweisen, welcher Mechanismus (10)
eine Stütze (W),
einen Hebel (20), der drehbar auf der Stütze (W) montiert ist und dazu angepasst ist, starr mit dem ersten Bauteil (A) verbunden zu werden,
ein Zahnrad (30), das drehbar auf der Stütze (W) montiert ist und dazu angepasst ist, starr mit dem zweiten Bauteil (B) verbunden zu werden, welches Zahnrad (30) eine Verzahnung (301) und einen Eingriffsabschnitt (302), der jenseits des Profils des Zahnrads (30) vorsteht, aufweist, und
einen Einschränkungsstift (P), der auf der Stütze (W) ausgebildet ist und bei einem festen Abstand von den Drehachsen (x_{A}, x_{B}) des ersten und zweiten Drehbauteils (A, B) liegt, und
ein Gestellbauteil (40), das mit dem Hebel (20) mittels einer Verbindung (403) verbunden ist, aufweist,
welcher Mechanismus (10) **dadurch gekennzeichnet ist, dass** eine Nut (404) in dem Gestellbauteil (40) ausgebildet ist, die an den Einschränkungsstift (P) in einer derartigen Weise gekoppelt ist, dass das Gestellbauteil (40) durch eingeschränkte Roto-Translation entlang einer gekrümmten Trajektorie zwischen einer ersten Endposition und einer zweiten Endposition bewegbar ist, welches Gestellbauteil (40) ein Steuerungsprofil (405), das dazu angepasst ist, durch ein Ende (303) des Eingriffsabschnitts (302) des Zahnrads (30) in einem ersten Bewegungsabschnitt des Gestellbauteils (40) zwischen der ersten Endposition und der zweiten Endposition in Eingriff gebracht und durch das Ende (303) des Eingriffsabschnitts (302) des Zahnrads (30) in einem zweiten Bewegungsabschnitt des Gestellbauteils (40) zwischen der ersten Endposition und der zweiten Endposition, der auf den ersten Bewegungsabschnitt folgt oder diesem vorangeht, gelöst zu werden, und eine Verzahnung (406), die dazu angepasst ist, durch die Verzahnung (301) des Zahnrads (30) in dem zweiten Bewegungsabschnitt zwischen der ersten Endposition und der zweiten Endposition in Eingriff gebracht zu werden, aufweist,
bei dem das Steuerungsprofil (405) in einer derartigen Weise ausgebildet ist, dass es das Zahnrad (30) noch hält, wenn das Zahnrad in dem ersten Bewegungsabschnitt des Gestellsbauteils (40) ist.

2. Mechanismus (10) nach Anspruch 1, bei dem der Eingriffsabschnitt (302) axial versetzt in Bezug auf die Verzahnung (301) des Zahnrads (30) angeordnet ist, und bei dem das Steuerungsprofil (405) dementsprechend axial versetzt in Bezug auf die Verzahnung (406) des Gestellbauteils (40) angeordnet ist.

3. Mechanismus (10) nach Anspruch 1 oder 2, bei dem das Gestellbauteil (40) ferner einen Fortsatz (402), der sich über ein Ende der Nut (404) hinaus erstreckt und an dem Hebel (20) angelenkt ist, aufweist.

4. Mechanismus (10) nach einem der vorhergehenden Ansprüche, bei dem der Hebel (20) dazu ausgebildet ist, mit einer Bewegungsquelle verbunden zu werden.

5. Luftverteilerkasten für Motorfahrzeuge mit einem Mechanismus (10) nach einem der vorhergehenden Ansprüche sowie einer ersten Luftverteilerklappe (A), die starr mit dem Hebel (20) verbunden ist, und einer zweiten Luftverteilerklappe (B), die starr mit dem Zahnrad (30) verbunden ist.

## Revendications

1. Mécanisme (10) pour raccorder mutuellement un premier et un second organes rotatifs (A, B) ayant des axes de rotation (x_{A}, x_{B}) respectifs parallèles et agencés à une distance fixe l'un de l'autre, le mécanisme (10) comprenant
un support (W),
un levier (20) monté en rotation sur le support (W) et adapté pour être raccordé de manière rigide au premier organe (A),
une roue d'engrenage (30) montée en rotation sur le support (W) et adaptée pour être raccordée de manière rigide au second organe (B), ladite roue d'engrenage (30) comprenant une denture (301) et une portion commandée (302) en saillie au-delà du profil de la roue d'engrenage (30), et
une broche de contrainte (P) formée sur le support (W) et située à une distance fixe des axes de rotation (x_{A}, x_{B}) des premier et second organes rotatifs (A, B), et
un organe à crémaillère (40) raccordé au levier (20) au moyen d'une liaison (403),
le mécanisme (10) étant **caractérisé en ce qu'**une rainure (404) est ménagée dans l'organe à crémaillère (40), ladite rainure (404) étant couplée à la broche de contrainte (P) de telle sorte que l'organe à crémaillère (40) soit mobile par roto-translation contrainte le long d'une trajectoire incurvée entre une première position d'extrémité et une seconde position d'extrémité, ledit organe à crémaillère (40) comprenant un profil de commande (405) adapté pour être engagé par une extrémité (303) de la portion commandée (302) de la roue d'engrenage (30) dans une première section de déplacement de l'organe à crémaillère (40) entre la première position d'extrémité et la seconde position d'extrémité et libéré par l'extrémité (303) de la portion commandée (302) de la roue d'engrenage (30) dans une seconde section de déplacement de l'organe à crémaillère (40) entre la première position d'extrémité et la seconde position d'extrémité, après ou avant la première section de déplacement, et une denture (406) adaptée pour être engagée par la denture (301) de la roue d'engrenage (30) dans la seconde section de déplacement entre la première position d'extrémité et la seconde position d'extrémité,
dans lequel le profil de commande (405) est configuré de façon à maintenir la roue d'engrenage (30) immobile lorsque la roue d'engrenage se trouve dans la première section de déplacement de l'organe à crémaillère (40).

2. Mécanisme (10) selon la revendication 1, dans lequel la portion commandée (302) est agencée axialement étagée par rapport à la denture (301) de la roue d'engrenage (30), et dans lequel le profil de commande (405) est agencé de manière axialement étagé correspondante par rapport à la denture (406) de l'organe à crémaillère (40).

3. Mécanisme (10) selon la revendication 1 ou 2, dans lequel l'organe à crémaillère (40) comprend en outre un appendice (402) s'étendant au-delà d'une extrémité de la rainure (404) et articulé sur le levier (20).

4. Mécanisme (10) selon l'une des revendications précédentes, dans lequel le levier (20) est configuré pour être raccordé à une source de mouvement.

5. Boîtier de distribution d'air pour véhicules à moteur comprenant un mécanisme (10) selon l'une des revendications précédentes, ainsi qu'un premier volet de distribution d'air (A) raccordé de manière rigide au levier (20) et un second volet de distribution d'air (B) raccordé de manière rigide à la roue d'engrenage (30).
